# EUROPEAN PATENT APPLICATION

(11) **EP 2 543 896 A1**
(43) Date of publication of application: **09.01.2013**
(21) Application number: 12174722.4
(22) Date of filing: 03.07.2012
(51) Int. Cl.: F16B 23/00

(54) **Screw for precision tightening**

(30) Priority: 04.07.2011 IT TO20110584
(71) Applicant: Fontana R.D. S.r.l., 20837 Veduggio Con Colzano (Monza e Brianza) (IT)
(72) Inventor: Fontana, Luigi, 20837 Veduggio con Colzano (Monza e Brianza) (IT)
(74) Representative: Gerbino, Angelo

(57) **Abstract**

The screw (10), which allows precision tightening to be carried out, comprises a threaded shank (12) and a head (14) having a pluri-lobed external profile comprising a series of circumferentially spaced lobes (16). Each lobe (16) is delimited by two flanks (18) having at least a radial portion contained in a respective plane passing through the longitudinal axis (20) of the screw (10) and by a front face (22) which joins the radially external ends of the two flanks (18).

## Description

The present invention relates to a screw for precision tightening.

More specifically, a screw of this type comprises a threaded shank and a head having a pluri-lobed external profile comprising a series of alternating and circumferentially spaced lobes and recesses.

Examples of screws of this type are known from the patent US 3 584 667.

The object of the present invention is to provide a screw of the general type described above, which can be tightened into the plastic range by the application of high torque, thus minimizing the stress on the tightening wrench as well as the weight of the screw itself, and in general constituting an improvement of the known screws.

According to the present invention, this object is achieved by means of a screw having the characteristics specified in Claim 1 below. Preferred characteristics of the present invention are described in the dependent claims.

In the screw according to the invention, the flanks of the lobes form radial planes which allow the transmission of high tightening torque by a tool having a hollow profile complementary to that of the external profile of the head. Because of the exchange of forces on radial planes, which cancels out the stress components in the orthogonal direction, the benefits of the maximization of the ratio between the transmissible torque and the head height are obtained, together with the benefits of the minimization of the stresses on the operating wrenches (box spanners).

Since the transmission of the tightening force takes place on a plane and not on a line, the contact pressure between the working surfaces (of the screw and the wrench) can be reduced. This prevents damage to the surface coating, thus preserving the head of the screw and its resistance to corrosion.

On the other hand, given that a tightening tool having this specific profile is not always immediately and readily available, it is also possible to use a standard tool, such as an ordinary hexagonal wrench, for operating the screw according to the invention, with results which, although less satisfactory than those obtainable with the specific tool, are still sufficient to reach the elastic limit of the screw. In particular, this result is achieved because of the fact that the distance between the opposite sides of a hexagon circumscribed around the screw has a value in mm equal to an integer.

The screw according to the invention has the further advantage of having a geometry that can optionally be created by cycles of forming which do not require extrusion cones, resulting in a reduction of the weight and overall dimensions.

Other advantages and characteristics of the present invention will become clear from the following detailed description which is given by way of non-limiting example with reference to the attached drawings, in which:
Figure 1 is a view in lateral elevation of a screw according to the present invention;
Figure 2 is a view in cross section taken along the line II-II of the screw of Figure 1; and
Figure 3 is a view in lateral elevation and in partial cross section of another embodiment of a screw according to the present invention.

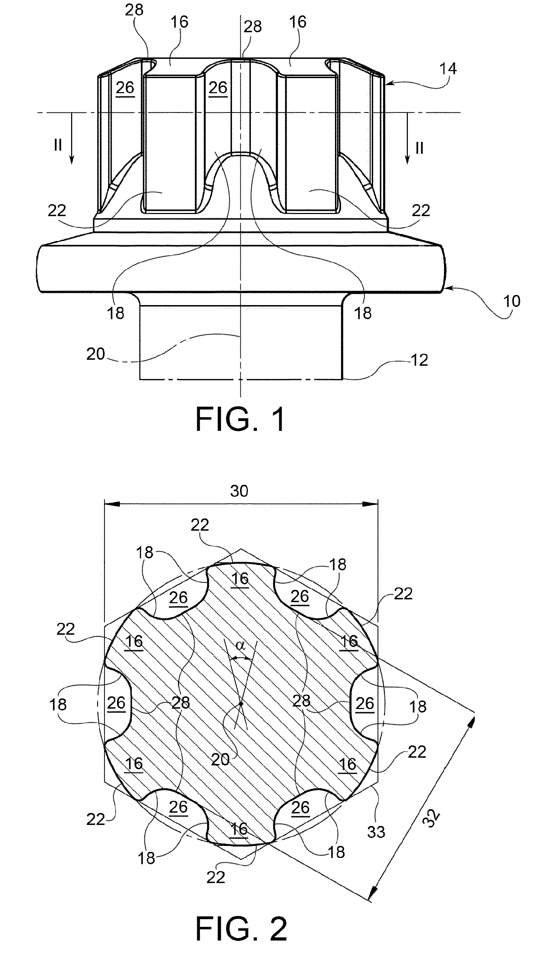

A screw 10 for precision tightening (Figures 1 and 2) comprises a threaded shank 12 and a head 14 having a pluri-lobed external profile comprising a series of circumferentially spaced lobes 16, in particular six identical and circumferentially equi-spaced lobes. Each lobe 16 is delimited by two flanks 18 having at least a radial portion contained in a respective plane passing through the longitudinal axis 20 of the screw 10 and by a front face 22 which joins the radially external ends of the two flanks 18. The front faces 22 of all the lobes 16 lie on the lateral surface of a cylinder having an axis coincident with the longitudinal axis 20 of the screw 10, in such a way that the outlines of the faces 22 form respective arcs of the same circumference 24 in any plane orthogonal to the longitudinal axis 20. The angular amplitude α of each lobe 16 is preferably in the range from 25° to 35°. Between each pair of adjacent lobes 16 there is interposed a respective recess 26 having an end surface 28 which has a flat portion and joins the radially internal ends of the facing flanks 18 of the adjacent lobes 16. In particular, each end surface 28 is formed by a single substantially straight portion which is joined to the ends of the flanks 18 to form rounded corners.

The corners formed at the intersection of each flank 18 with the respective front face 22 and end surface 28 are rounded.

The ratio between the distance 30 between the opposite sides of a regular hexagon 33 circumscribed around the screw 10, in particular around the lobes 16 or the recesses 26, and the distance 32 between the end surfaces 28 of two diametrically opposite recesses is preferably in the range from 1.40 to 1.10, and in particular is equal to 1.25.

The screws 10 can be tightened not only with specific tightening tools, each of which has a cavity whose shape is complementary to that of the external profile of the head 14 and therefore allows the transmission of torque through radial planes, but also with ordinary tools such as hexagonal box spanners. In particular, if the distance 30 between opposite sides of the circumscribed hexagon 33 has a value in mm equal to any integer in the range from 6 to 32, the corresponding screws 10 can be manoeuvred with standard hexagonal wrenches, which have a profile substantially identical to that of the circumscribed hexagon 33 and can thus be coupled to the corresponding head 14.

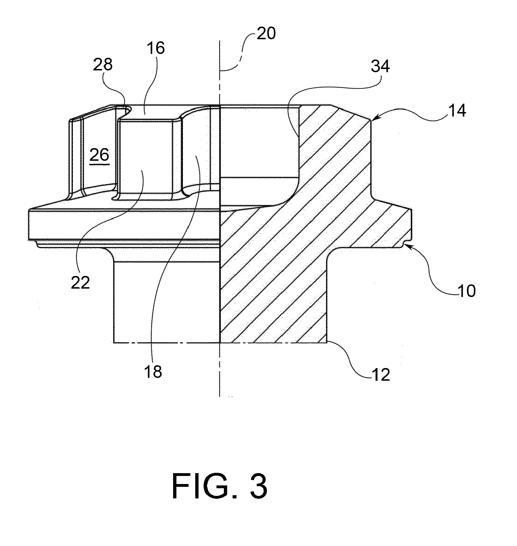

Figure 3 shows an alternative embodiment of the invention, in which numbers identical to those used in the preceding figures indicate identical or equivalent parts.

The only difference from what was illustrated previously lies in the fact that the central portion of the head 14 of the screw 10 is hollow. The resulting cavity 34 therefore enables the structure of the screw 10 to be lightened without compromising its mechanical properties.

Naturally, the principle of the invention remaining the same, the details of construction and the forms of embodiment may be varied widely with respect to those described, which have been given purely by way of example, without thereby departing from the scope of the invention as defined in the attached claims.

## Claims

1. Screw (10) for precision tightening comprising a threaded shank (12) and a head (14) having a pluri-lobed external profile comprising a series of circumferentially spaced lobes (16), each of which lobes (16) is delimited by two flanks (18) having at least a radial portion contained in a respective plane passing through the longitudinal axis (20) of the screw (10) and by a front face (22) which joins the radially external ends of the two flanks (18).

2. Screw (10) according to Claim 1, wherein a respective recess (26) having an end surface (28) which has at least one flat portion and joins the radially internal ends of the facing flanks (18) of adjacent lobes (16) is present between each pair of adjacent lobes (16).

3. Screw (10) according to Claim 2, wherein the corners formed at the intersection of each flank (18) with the respective front face (22) and bottom surface (28) are rounded.

4. Screw (10) according to Claim 2 or 3, wherein the bottom surface (28) is formed by a single straight portion.

5. Screw (10) according to any one of the preceding claims, comprising six circumferentially equi-spaced lobes (16).

6. Screw (10) according to any one of the preceding claims, wherein the outlines of the central faces (22) in any plane orthogonal to the longitudinal axis (20) constitute respective arcs of the same circumference (24).

7. Screw (10) according to any one of the preceding claims, wherein the front faces (22) of all the lobes (16) lie on the lateral surface of a cylinder having an axis coincident with the longitudinal axis (20).

8. Screw (10) according to any one of the preceding claims, wherein the distance (30) between opposite sides of a hexagon (33) circumscribed around the screw (10), in particular around the lobes (16) or around the recesses (26) present between pairs of adjacent lobes (16), has a value in mm equal to any integer.

9. Screw (10) according to any one of the preceding claims, wherein the angular amplitude of each lobe (16) is in the range from 25° to 35°.

10. Screw (10) according to any one of the preceding claims, wherein the central portion (34) of the head (14) is hollow.

11. Screw (10) according to any one of the preceding Claims 2 to 10, wherein the ratio between the distance (30) between opposite sides of a regular hexagon (33) circumscribed around the screw (10) and the distance (32) between the end surfaces (28) of two diametrically opposite recesses (26) is in the range from 1.40 to 1.10.
